# EUROPEAN PATENT APPLICATION

(11) **EP 1 362 776 A2**
(43) Date of publication of application: **19.11.2003**
(21) Application number: 03076389.0
(22) Date of filing: 09.05.2003
(51) Int. Cl.: B62J 17/04

(54) **Device for quickly locking a windshield to a two-wheeled vehicle**

(30) Priority: 14.05.2002 IT MI20020255 U
(71) Applicant: PIAGGIO & C. S.p.A., 56025 Pontedera (Pisa) (IT)
(72) Inventor: Bagnoli, Alessandro, 56030 Perignano di Lari (Pisa) (IT)
(74) Representative: Zanardo, Giovanni

(57) **Abstract**

A device (20) for quickly locking a windshield (12) to two-wheeled vehicle (10), of the type comprising at least one support shaft (16) connected on one side to said windshield (12); at least one portion of the support shaft (16) is inserted in a sleeve element (22), integral with a part of the bodywork (14), placing at least one expandable element (36) between them, which is expanded in a space around the portion of support shaft (16) and inside the sleeve element (22), a thrusting means (34) compressing the expandable element (36).

## Description

The present invention refers to a device for quickly locking a windshield to a two-wheeled vehicle.

A windshield for a two-wheeled vehicle can be fixed either to the handlebars of the vehicle itself or to a part of the bodywork, in particular to the front shield of the vehicle. Alternatively, the windshield can also be integrated directly with the vehicle, in a fixed manner or also telescopically.

To fix the windshield locking devices which are generally removable are used, comprising for example bolts and sleeves, in the case of connection with the handlebars, whereas in the case of connection with the bodywork of the vehicle locking devices which are not removable or at least difficult for the user to disconnect are used.

The solution of connection between windshield and handlebars is not optimal from the point of view of the handling the vehicle, i.e. the ease of control of the vehicle both when stood still and during motion.

Indeed, by adding the mass of the windshield to that of the handlebars and thus basically to the steer, the moment of inertia of the steer itself increases. Moreover, all of the forces hitting the windshield, such as wind, are transmitted to the handlebars, which thus generates vibrations transferred onto the steer.

For these reasons the solution of connection of the windshield with the front windshield of the bodywork is better.

Nevertheless, the connection with the handlebars is more cost-effective and easier to manage since it concerns assembly or disassembly by the user.

These characteristics, which are appreciated by clients, are missing in windshields connected to the bodywork which are currently available on the market. These windshields, indeed, use locking devices which have a rather complicated construction, thus generating a rather high price. Furthermore, their positioning requires special keys and tools, as well as a certain amount of time for the arrangement of the parts and the locking together.

The purpose of the present invention is that of avoiding the aforementioned drawbacks and in particular that of realising a device for quickly locking a windshield to a part of the bodywork of a two-wheeled vehicle which allows almost immediate assembly and disassembly by the user of the windshield itself, without the use of special tools.

Another purpose of the present invention is that of realising a device for quickly locking a windshield to a part of the bodywork of a two-wheeled vehicle which has extremely simplified construction bringing a cutting of the manufacturing costs.

Another purpose of the present invention is that of realising a device for quickly locking a windshield to a part of the bodywork of a two-wheeled vehicle which is particularly reliable and functional.

These and other purposes according to the present invention are accomplished by realising a device for quickly locking a windshield to a part of the bodywork of a two-wheeled vehicle as outlined in claim 1.

Further characteristics of a device for quickly locking a windshield to a two-wheeled vehicle are the object of the dependent claims.

The characteristics and advantages of a device for quickly locking a windshield to a two-wheeled vehicle according to the present invention shall become clearer from the following description, given as an example and not for limiting purposes, referring to the attached schematic drawings, in which:

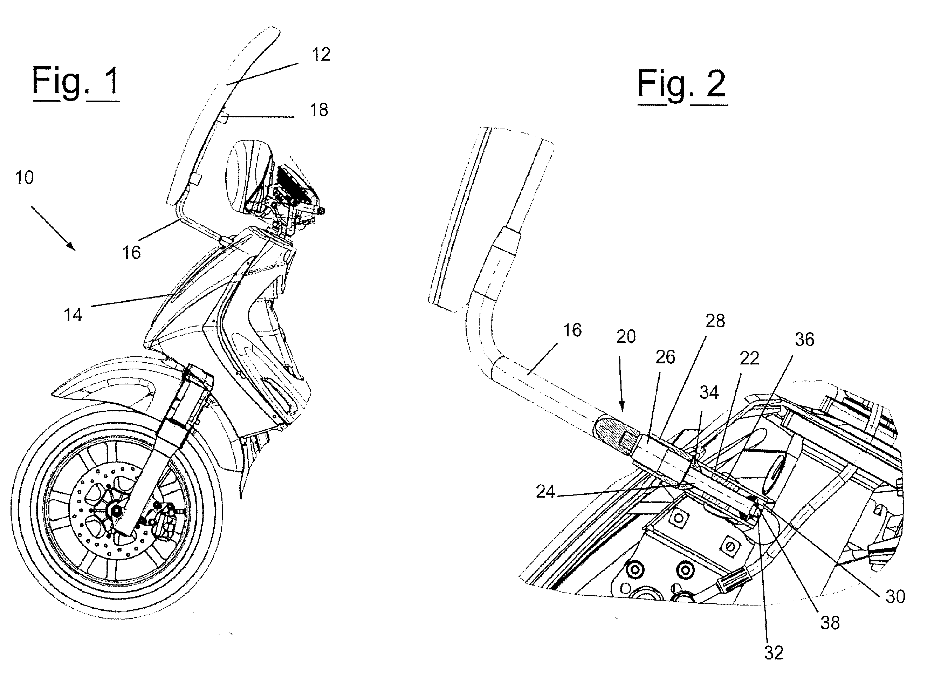

figure 1 is a side elevation view of a front portion of a two-wheeled vehicle, equipped with a windshield connected to a part of the bodywork;
figure 2 is an enlarged partial section view of a detail of figure 1, which shows a device for quickly locking a windshield according to the present invention.

With reference to the figures, a two-wheeled vehicle is shown, wholly indicated with 10, equipped with a windshield 12 which is connected to a part of the bodywork of the vehicle 10 itself, such as a front shield 14.

The windshield 12 has at least one support shaft 16, which is generally L-shaped. Typically there are two shafts 16.

On one side the shaft 16 is connected to the windshield 12. Such a connection is realised with mutual position adjustment and attachment means 18, which allows the relative position between windshield 12 and shaft 16 to be modified and which are known in the prior art.

On the opposite side the shaft 16 is connected to the front shield 14 of the vehicle 10 through a fast locking device 20 according to the present invention.

The locking device 20 comprises a sleeve element 22, fixed to the bodywork of the two-wheeled vehicle 10 and whose hollow part can be accessed from the front of the shield 14.

More specifically, in such a sleeve element 22 a pin 24 is inserted, connected to an end of the support shaft 16 for example through threaded coupling.

On one side of the pin 24 near to the connection with the shaft 16, an externally threaded cylinder 26 is foreseen. The cylinder 26 is externally coupled with a nut 28.

The pin 24 is positioned centrally in the sleeve element 22 until it reaches a base 30 of the sleeve element 22, to which it is fixed through a centring screw 32.

About the pin 24 are also mounted a thrusting means, such as a first frusto-conical washer 34, an expandable element, such as an elastic spacer 36, and a second frusto-conical washer 38.

The second frusto-conical washer 38 has smaller outer dimensions than the inner diameter of the sleeve element 22. As well as a frustum of cone shaped face, the second washer 38 has a flat base which is mounted interfacing with the base 30 of the sleeve element 22.

The elastic spacer 36 has an annular structure, with outer dimensions at rest which are less than the inner diameter of the sleeve element 22, and thus capable of being inserted in it 22.

The first frusto-conical washer 34 has a frustum of cone shaped face and a flat base. On at least one portion of the flat base of the first washer 34 rests a side element of the nut 28.

The frustum of cone of the first washer 34 has dimensions such as to be able to be at least partially inserted inside the sleeve element 22, thus pushing the elastic spacer 36.

The operation of the device 20 for quickly locking a windshield 12 to a part of the bodywork 14 of a two-wheeled vehicle 10 according to the invention is clear from that which has been described above with reference to the figures, and in brief is the following.

The pin 24 is initially connected to the support shaft 16. The pin 16 is then inserted in the sleeve element 22, having previously inserted the first frusto-conical washer 34, the elastic spacer 36 and the second frusto-conical washer 38 in the pin 24, at the part free from the cylinder 26.

The pin 36 is then fixed through the centring screw 32. At this point it is possible to screw the nut 28 onto the cylinder 26, thus operating a longitudinal translation thereof: the side end of the nut 28 rests upon the first frusto-conical washer 34 and pushes it until it makes it insert into the sleeve element 22.

Such an operation involves compression of the elastic spacer 36, which tends to expand against inner walls of the sleeve element 22 and of the pin 24. In this way this spacer actuates the locking of the pin 24, and thus of the shaft 16 to which it is connected, in the sleeve element 22, and thus to a bodywork of the vehicle 10.

It should be noted that the expandable element can comprise more than one elastic spacer element 36 of the type described, arranged in series and separated apart by flat washers.

Furthermore, the elastic spacer 36, besides the locking function, also gives a damping action against possible transmitted vibrations.

As an alternative to the nut 28, there can be other devices which actuate the pushing of the first washer 34, such as a lever.

It is interesting to note that the frusto-conical washers 34 and 38 ensure the centring and the correct alignment of the fast locking device 20 of the present invention.

From the description which has been carried out the characteristics of the device for quickly locking a windshield to a part of the bodywork of a two-wheeled vehicle object of the present invention are clear, just as the relative advantages are clear, amongst which we recall:
- better handling of the vehicle;
- easier assembly and disassembly of the windshield by the user, without using special tools;
- cutting of realisation costs;
- simple and reliable use.

Finally, it is clear that the device for quickly locking a windshield to a part of the bodywork of a two-wheeled vehicle thus conceived is susceptible to numerous modifications and variants, all of which are covered by the invention. Moreover, all of the details can be replaced with technically equivalent elements. In practice, the materials used, as well as the sizes, can be whatever according to the technical requirements.

## Claims

1. Device (20) for quickly locking a windshield (12) to two-wheeled vehicle (10), of the type comprising at least one support shaft (16) connected on one side to said windshield (12), **characterised in that** at least one portion of said support shaft (16) is inserted in a sleeve element (22), integral with part of the bodywork (14), placing at least one expandable element (36) between them, which is expanded in a space around said portion of support shaft (16) and inside said sleeve element (22), a thrusting means (34) compressing said expandable element (36).

2. Locking device (20) according to claim 1, **characterised in that** said part of the bodywork (14) of said two-wheeled vehicle (10) is a front shield (14).

3. Locking device (20) according to claim 1, **characterised in that** said at least one expandable element (36) is an elastic spacer having an annular structure, with outer dimensions at rest which are less than the inner diameter of said sleeve element (22).

4. Locking device (20) according to claim 1, **characterised in that** said support shaft (16) is L-shaped and is connected on one side to said windshield (12) with mutual position adjustment and attachment means (18).

5. Locking device (20) according to claim 2, **characterised in that** in said sleeve element (22), with a hollow part which can be accessed from the front of said shield (14), a pin (24) is inserted, connected to an end of said support shaft (16).

6. Locking device (20) according to claim 5, **characterised in that**, on one side of said pin (24) near to the connection with said shaft (16), an externally threaded cylinder (26) is foreseen.

7. Locking device (20) according to claim 6, **characterised in that** said cylinder (26) is coupled externally with a nut (28).

8. Locking device (20) according to claim 6, **characterised in that** about said pin (24) said thrusting means, comprising a first frusto-conical washer (34), an elastic spacer (36) and a second frusto-conical washer (38) are mounted.

9. Locking device (20) according to claim 8, **characterised in that** said second frusto-conical washer (38) has smaller outer dimensions than the inner diameter of said sleeve element (22) and has a frustum of cone shaped face and a flat base, said flat base being mounted facing a base (30) of said sleeve element (22).

10. Locking device (20) according to claim 8, **characterised in that** said first frusto-conical washer (34) has a frustum of cone shaped face and a flat base, on at least one portion of said flat base of said first washer (34) resting a side end of a nut (28).

11. Locking device (20) according to claim 10, **characterised in that** said frustum of cone of said first washer (34) has dimensions such as to be at least partially inserted inside said sleeve element (22).

12. Locking device (20) according to claim 5, **characterised in that** said pin (36) is fixed through a centring screw (32) on a base (30) of said sleeve element (22).

13. Locking device (20) according to claim 1, **characterised in that** said expandable element comprises at least two elastic spacers (36), arranged in series and separated apart by flat washers.

14. Locking device (20) according to claim 1, **characterised in that** said support shafts (16) are two in number.
